Europäisches Patentamt

(19) European Patent Office

Office européen des brevets

(11) Publication number: **0 259 010**
**B1**

(12) EUROPEAN PATENT SPECIFICATION

(45) Date of publication of the patent specification:
20.06.90

(21) Application number: 87306855.5

(22) Date of filing: 03.08.87

(51) Int. Cl.⁵: **F16F 9/32**, B23P 15/10

(54) Method of manufacturing a modular piston and piston rod assembly.

(30) Priority: 02.09.86 US 902506

(43) Date of publication of application:
09.03.88 Bulletin 88/10

(45) Publication of the grant of the patent:
20.06.90 Bulletin 90/25

(84) Designated Contracting States:
DE FR GB

(56) References cited:
EP-A- 0 002 144
CH-A- 320 990
DE-C- 939 784
FR-A- 1 024 801
FR-A- 1 070 127
US-A- 3 919 509

(73) Proprietor: GENERAL MOTORS CORPORATION,
General Motors Building 3044 West Grand Boulevard,
Detroit Michigan 48202(US)

(72) Inventor: Wells, Joel Ray, 4954 Powell Road, Huber
Heights Ohio 45424(US)

(74) Representative: Denton, Michael John et al, Patent
Section - Luton Office (F6) Vauxhall Motors Limited P.O.
Box 3 Kimpton Road, Luton Bedfordshire LU2 0SY(GB)

## Description

This invention relates to a method of manufacturing a modular piston and piston rod assembly, particularly for a damper unit, as, for example, disclosed in CH-A 320 990.

Various gas and hydraulic stroking piston and cylinder units utilise a modular shell-like piston joined to a piston rod by means of a high tensile strength joint, one device of this kind as embodied in a damper unit being shown in US-A 3 724 615.

CH-A 320 990 discloses a method as detailed in the pre-characterising portion of claim 1 in which a tube is closed by a head. DE-C 939 784 discloses another arrangement in which a tube is beaded into grooves in an end head. Neither of these publications go in to detail of how the connection between the tube and head is formed.

A method of manufacturing a modular piston and piston rod assembly in accordance with the present invention is characterised over CH-A 320 990 by the method steps specified in claim 1.

The method in accordance with the present invention thereby makes it possible to obtain a stroking piston and piston rod assembly having a new and improved high-strength tensile joint concentrically and squarely coupling the piston to the piston rod, with optimised concentricity of these parts.

To achieve this result, the method in accordance with the present invention advantageously utilises a matched and formed interconnection of wall elements of the piston and piston rod to make a high-strength tensile connection between the respective parts.

This is accomplished by the method in accordance with the present invention by the formation of a specific annular rolled-in tongue and groove type of interconnection that does not add any mass or material to the assembly and does not introduce contaminants that would detract from service life and efficiency of the unit.

The method in accordance with the present invention employed for the interconnection provides the optimum use of material without appreciable scrap, and with automatic lengthening of the piston rod from a cut length to a specified design length.

Furthermore, this method of joining the piston to the piston rod ensures automatic and precise centring and squaring of these parts.

After the piston rod and piston have been assembled, a valve assembly including an orifice plate and valving can be installed in the shell-like piston, whereafter the lower annular edge region of a skirt portion of the piston can be spun over to retain the orifice plate and valving therein.

The inwardly radiused outer groove of the upstanding cylindrical collar of the piston shell can also provide an annular locking surface receiving an inwardly extending annular resilient retainer ring formed on an elastomeric jounce bumper which may be employed in many installations.

Additionally, when the jounce bumper is installed on a retainer groove, the method in accordance with the present invention allows a lower force-spreader plate to be secured in a fixed position on the piston rod and against the upper face of the piston.

In a preferred embodiment of a method in accordance with the present invention, the piston rod is roll-formed with an annular groove of a constant dimension and at a precise location relative to an upper end of the piston rod. This action elongates the piston rod. After the piston rod has been roll-formed with this groove, a piston shell is installed in telescopic relationship on the piston rod. Preferably the piston has a shell having a perpendicular neck that is press-fitted to a positive stop on the piston rod so that the groove is in a precise but hidden location. After this has occurred, forming rollers are brought into action to roll-form an annular groove into the neck of the piston, to displace material radially inwardly and directly into the groove of the piston rod, to make a high-strength tensile joint.

By carrying out the annular roll-forming with uniform pressure, and using the same roll-forming machine with only the form rollers being changed for the finish roll, a new and higher standard for squareness, perpendicularity and concentricity can be obtained.

If even higher-strength joints are required, more than one form-rolled groove connection can be made.

In the drawings:

Figure I is a side view, with parts shown broken away and in section, of an air suspension damper incorporating having a high-strength piston and piston rod interconnection made by a method in accordance with the present invention;

Figure 2 is a fragmentary sectional view of the piston and piston rod assembly, and the interconnection thereof, generally on the line 2--2 of Figure 1, with some parts omitted for clarity;

Figure 3 is a diagrammatic fragmentary view showing a roll-forming machine utilised to make the piston and piston rod connection illustrated in Figure 2;

Figure 4 is a diagrammatic view generally on the line 4--4 of Figure 3, illustrating the roll-forming action of the machine in making the high tensile strength connection by a method in accordance with the present invention;

Figures 5 and 6 are diagrammatic views illustrating the roll-forming action of the machine in roll-forming a groove into the piston rod in a method in accordance with the present invention; and

Figures 7 and 8 are views similar to Figures 5 and 6, illustrating the roll-forming of the piston on to the piston rod in accordance with the present invention, with the rod acting as a mandrel, to produce a centralised interconnection of these two parts by the formation of a high-strength tensile joint.

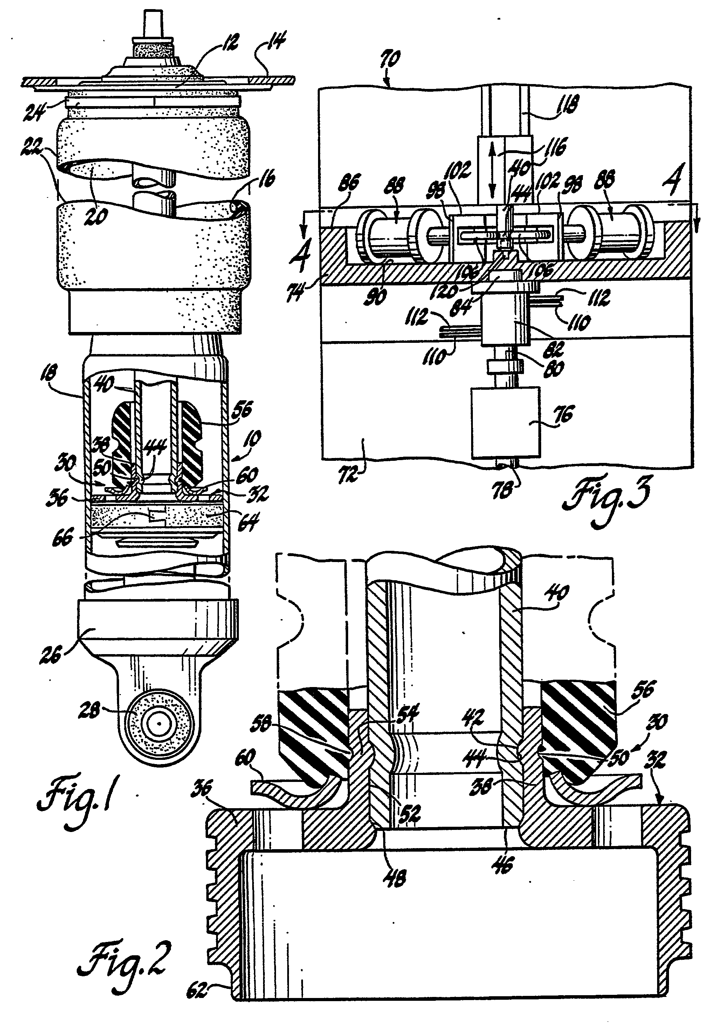

With reference now in greater detail to the drawings, Figure 1 shows an air suspension damper 10 having a top mount 12 secured to a vehicle body 14. An inner air sleeve 16 is secured at its upper end to the top mount 12 and at its lower end to the top of a generally cylindrical reservoir tube 18, to define an air suspension chamber 20 for containing pressurised air for the pneumatic suspension of the vehicle.

A resilient elastomeric outer support sleeve 22 is connected to the top mount 12 by means of a band 24, to surround and provide full-time support and protection for the air sleeve 16. The reservoir tube 18 comprises an elongate tube that is fastened at its lower end in a base cup 26 that includes a lower isolation mount 28 secured to an unsprung portion of the vehicle, such as the rear axle of the vehicle.

The air spring damper 10 further incorporates a valved piston and piston rod assembly 30 mounted for stroking movement in the cylindrical reservoir tube 18. The piston 32 of the piston and rod assembly 30 comprises a cylindrical metallic main shell 36, best seen in Figure 2, having a centralised and upstanding cylindrical neck (collar) 38.

The piston and rod assembly 30 further comprises a tubular metallic piston rod 40 extending from a roll-formed high tensile strength connection 42 to the cylindrical neck 38 of the piston shell 36 and axially through the reservoir tube 18 into connection with the elastomeric main body of the top mount 12. The piston rod 40 is treated with a protective coating (such as Melonite) so that welding of the piston rod to the piston will produce a clean, precisely centred high tensile strength joint as is required in many installations such as the air suspension damper shown in Figure 1.

More particularly, the piston rod 40 comprises a tubular member that is of a predetermined wall thickness and is cut to a predetermined length which is less than the required length of the piston rod. This rod is subsequently elongated to the design length, for example by a distance of 1 mm, by roll-forming an annular groove 44 in the wall therein at a location adjacent the lower end 46 and at a predetermined distance from a squared and finished upper end of the rod. This annular groove 44 in the piston rod provides an annular anchorage groove for the piston 32, whose neck 38 perpendicular to the body of the shell is telescoped over the lower end portion of the piston rod. The parts are preferably press-fitted together until the lower end 46 of the piston rod strikes an internal annular stop surface 48 within the piston shell.

After these parts have been precisely located, a second annular groove 50 is rolled in the outer wall of the neck 38. The roll-forming of this second groove 50 causes the inner wall 52 of the neck 38 to be radially deformed inwardly to provide an annular ridge (tongue) 54 that fills the groove 44 in the piston rod 40 to provide an annular high-strength, interlock. The piston interlock has a high tensile strength which allows it to carry the large-magnitude rebound and jounce loads that may frequently occur as the vehicle is being driven, particularly along roadways that are rough and bumpy.

As is shown in Figures 1 and 2, the piston 32 carries a resilient generally cylindrical rebound bumper 56 of elastomeric material that is moulded to include an annular inwardly extending connector ring 58 which, when inserted over the piston rod 40 and the neck 38 of the piston 32, deflects into the outer groove 50 formed in the neck 38 of the piston.

With the rebound bumper 56 retained by this resilient tongue and groove type of connection, the bumper 56 effectively cushions jounce without working loose, but can be removed for replacement if rebuild of the air suspension damper is required.

In addition to the releasable securement of the bumper 56 to the piston, this connection maintains an annular load-spreading washer 60 in place below the lower end of the rebound bumper 56 and above the upper surface of the main shell of the piston 32.

The piston contains an orifice plate and flow control valving that are retained within the piston shell by spinning a lower cylindrical flange 62 of the piston shell inwardly.

The piston shell 36 carries on its grooved outer circumference a band-type annular seal 64 of graphite-filled polytetrafluorethylene (Teflon) or other suitable anti-friction material. The free ends of this seal are joined together by means of a tongue and slot connection 66 as shown in Figure 1.

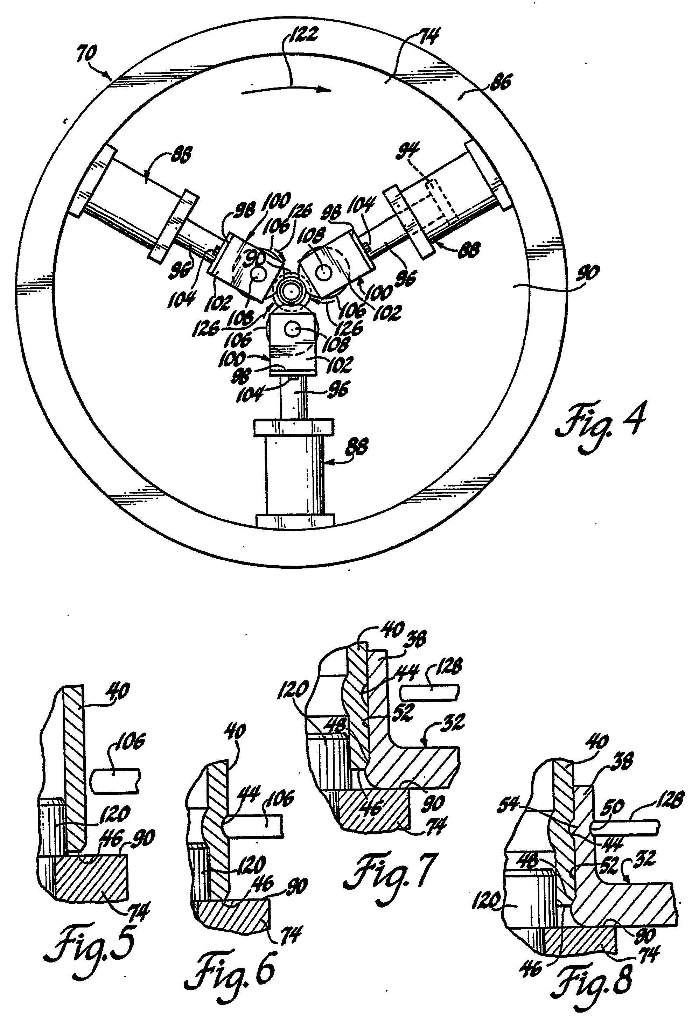

The method and machinery used to make the high tensile strength interlock in conformity with the present invention are diagrammatically illustrated in Figures 3 to 8. In Figure 3, a roll-forming machine 70 is shown having a base 72 on which a face plate 74 is rotatably mounted. The face plate 74 is driven by a drive motor and speed reducer (not shown) by way of a selectively engageable clutch 76 and an input drive shaft 78.

The clutch has an output shaft 80 that drives a through rotary hydraulic union 82, and is drivingly connected at 84 to the centre of the face plate 74. The face plate 74 forms an annular support with a projecting peripheral wall 86. Three identical and radially-oriented hydraulic-powered cylinders 88 are attached to the wall 86 and to the outer surface 90 of the face plate 74 equidistant from one another, as best seen in Figure 4.

Each of the equally spaced cylinders 88 incorporates a piston 94 having a piston rod 96 extending radially inwardly therefrom. The radially inner end of each piston rod 96 carries a mounting plate 98 to which a forming roller assembly 100 is removably attached. Each forming roller assembly 100 has a carrier (clevis) 102 having a generally U-shaped cross-section with an outer wall releasably attached to the mounting plate of the power piston by means of a suitable fastener, diagrammatically illustrated as comprising a respective screw 104.

Each of the carriers 102 has inner and outer side walls, spaced to accommodate a forming roller 106 that is rotatably mounted on a pin 108. Hydraulic supply and return lines 110, 112 operatively interconnect a hydraulic pump (not shown), the hydraulic rotary union 72 and the power pistons 88 to route pressure fluid for cylinder operation in moving the forming rollers 106 between a retracted position allowing workpiece loading and unloading and the roll-forming position illustrated in Figures 3 and 4.

The workpiece, illustrated as being the piston rod 40, is axially moved from a retracted loading and unloading position to a roll-forming position, shown in Figures 3 and 4, by means of a pair of clamp-like gripping jaws 116 which are movable on tracks (ways) 118 in the face plate and are powered by a power cylinder. Conventional hydraulic controls, not illustrated, are employed to control the supply of fluid to and from the cylinders to effect the cylinder operation and roll-forming of the piston rod and piston to provide the required high-strength tensile joints between these components.

Figure 3 illustrates the piston rod 40 gripped by the clamps 116 and moved from the loading position to the working or roll-forming position on to an optional locator pin 120 projecting from the face plate 64. The radially disposed and equispaced power cylinders are hydraulically actuated to stroke inwardly as shown diagrammatically in Figure 5, and then into rolling contact with the cylindrical wall of the piston rod 40. The face plate is rotated clockwise, as indicated by arrow 122 in Figure 4, by operation of the drive motor and drive-engagement of the clutch 76. As the face plate is rotated, and the forming rollers engage the wall of the clamped and stationary piston rod 40 with equal force under axial pressure from the cylinders 88, the forming rollers 106 rotate clockwise, as shown by arrows 126, to form the uniform annular groove 34 adjacent the lower end of the piston rod.

In addition to being roll-formed inwardly, the material of the tubular piston rod is displaced axially, to increase the axial length of the rod to the required design height. Figures 5 and 6 illustrate the lengthening of the piston rod, by a distance of about 1 mm downwardly, for example, into engagement with the face plate 64.

After the annular uniform groove 44 has been formed, the grooved piston rod 40 is moved to a retracted position so that the neck 38 of the piston shell 36 can be telescoped over the end of the piston rod and pressed inwardly until the tapered stop surface on the end of the piston rod 40 engages the annular stop surface 48 formed within the shell of the piston. With the two workpiece parts thus precisely located in the axial direction, they are moved as a unit to the roll-forming position shown in Figures 6 and 7.

When in the retracted position, the carriers 102 and their forming rollers 106 are removed from the end of the piston rod 40, and replaced by a second set of carriers and forming rollers 128 generally like those of the first set but having a smaller roller width, so that the ring-like inner annular ridge 54 made by the forming roller 128 matches the radius of the formed groove 44 on the outer diameter of the piston rod 40.

Figure 7 illustrates the condition which occurs as the power cylinder is stroked to move the small-width forming roller 128 towards the neck 38 of the piston, in precise radial alignment with the groove 44 in the piston rod 40. The face plate is again rotatably driven as described above, and the forming rollers 128 are moved into equal and opposing pressure engagement with the neck 38 to form the groove 50 in the neck.

The material of the neck 38 is thereby worked to form the internal inwardly extending annular locking ridge 54, which is worked into the groove 34 to join the respective parts together with a high tensile strength connection.

With the second set of forming rollers 128 rotatably deforming the perpendicular cylindrical neck 38 of the piston 32 into the groove of the piston rod 40, the piston is precisely centred with respect to the piston rod. This self-centring concentricity, and also squareness, is obtained because both of the grooves 44 and 50 are uniform and are made using the same machine.

There are no residual particles to adversely affect the air suspension damper valving, the rolling air sleeve, bearings, seals or any other components within the unit. Furthermore, there is no need for under-cutting, drilling or pinning. Also, there is no heat distortion and misalignment, as might occur with other fastener arrangements.

The high-strength tensile joint and its method of manufacture have been described in connection with an air suspension damper, but the method can be effectively utilised to join together other tubular parts, such as in hydraulic pistons and for struts and spring suspensions, and furthermore it can be utilised with other automotive components. The specific form of air damper described herein forms the subject of EP-A 87 306 415.8 (based on USSN 896 452) and published under the no. 0 275 779.

**Claims**

1. A method of manufacturing a modular piston and piston rod assembly for a damper unit, comprising the steps of:
    making an elongate hollow piston rod (40) with a predetermined wall thickness and with upper and lower (46) ends;
    locating a predetermined position on the piston rod (40) from one of the ends thereof and adjacent one (46) of the ends thereof;
    forming an annular first groove (44) in the piston rod (40) which corresponds to the said predetermined position and which deforms and grooves the wall of the piston rod (40) in a radially inward direction;
    inserting the piston rod (40) into an upstanding cylindrical collar (38) of a piston shell (36); and
    deforming an annular second groove (50) into the collar (38) concentric with the first groove (44) so that an annular portion (54) of the inner wall (52) of the collar (38) is caused to enter the first groove (44) and so interconnect the piston rod wall and the piston shell (36); characterised in that the annular first groove (44) is formed in the piston rod (40) by holding the piston rod (40) stationary, moving a plurality of groove-forming rollers (106) axially from a starting position radially inwardly to a working position, and rotating the groove-forming rollers (106) to form the annular first groove (44) in the piston rod (40); and in that the annular second groove (50) is formed by holding the piston rod (40) stationary in a work position, and moving a plurality of equally spaced forming rollers (128) in a direction radially inwardly in opposition to one another so that the piston rod (40) acts as a mandrel and the piston is squarely coupled to the piston rod with optimised concentricity of both parts.

2. A method according to claim 1, characterised in that the piston shell (36) includes a cylindrical main body, the upstanding cylindrical collar (38) of the piston shell (36) extends from a central portion of the main body, in the interconnected condition the piston rod (40) extends into concentric relationship with the upstanding cylindrical collar (38) of the piston shell (36), with interfacing cylindrical walls of the piston rod (40) and of the cylindrical collar (38) contacting one another, and the annular portion (54) of the inner wall (52) of the collar (38) that is effective to interconnect the piston rod wall and the piston shell (36) comprises annular tongue means interfitting with the annular first groove (44) to provide a high tensile strength joint.

3. A method according to claim 1 or 2, characterised in that an elastomeric cylindrical bumper member (56) surrounds the piston rod (40), with a radially inwardly extending ring member (58) of the bumper member (56) fitting into the second annular groove (50) to connect the bumper member (56) to the piston rod (40).

4. A method according to claim 3, characterised in that load spreader washer means (60) is trapped by the bumper member (56) and the piston (32) by location of the bumper member (56) relative to the piston (32).

5. A method according to claim 1, characterised in that the piston shell (36) forms part of a shell-like piston (32) having a main cylindrical body, with the upstanding cylindrical collar (38) forming a centralised cylindrical neck extending perpendicularly upwardly from the main cylindrical body of the piston (32), the piston rod (40) and the piston (32) are respectively dimensioned to telescopically interfit in close relationship with respect to one another, the deformation of the second groove (50) into the collar (38) of the piston shell (36) forms annular tongue and groove means to rigidly join the piston (32) to the piston rod (40) with a high tensile strength mechanical joint, and an elastomeric member (56) has an internal tongue (58) resiliently fitting into one (50) of the external annular grooves (44 and 50) to thereby retain the elastomeric member (56) on the connection between the piston (32) and the piston rod (40).

6. A method according to claim 5, characterised in that a washer (60) is disposed around the cylindrical collar (38) and the piston rod (40), and is retained in position by contact with the lower end of the elastomeric member (56).

7. A method according to claim 5 or 6, characterised in that the internal tongue (58) of the elastomeric member (56) provides a spring interconnection joining the elastomeric member (56) to the cylindrical collar (38) of the piston (32).

**Revendications**

1. Procédé de réalisation d'un ensemble piston modulaire-tige de piston, pour amortisseur, du type consistant:
à réaliser un tige de piston (40), creuse et d'assez grande longueur, possédant une épaisseur de paroi fixée à l'avance et offrant des extrémités supérieure et inférieure (46),
à localiser une position fixée à l'avance sur la tige de piston (40) à partir d'une des extrémités de celle-ci et en un emplacement contigu à l'une (46) de ces extrémités,
à ménager, dans la tige de piston (40), une première gorge annulaire (44) qui correspond à ladite position fixée à l'avance et qui déforme et creuse la paroi de la tige de piston (40) vers l'intérieur dans le sens radial,
à introduire la tige de piston (40) dans un collet cylindrique (38) se dressant sur une chemise de piston (36) et
à ménager, par déformation, un seconde gorge annulaire (50) dans le collet (38), d'une manière concentrique à la première gorge (44), de façon à faire pénétrer dans cette dernière une partie annulaire (54) de la paroi intérieure (52) du collet (38) et à réaliser ainsi une connection mutuelle de la paroi de la tige de piston et de la chemise de piston (36),
caractérisé en ce qu'on réalise la première gorge annulaire (44) dans la tige de piston (40) en maintenant cette dernière fixe, en déplaçant plusieurs molettes de rainurage (106) suivant leur axe et vers l'intérieur dans le sens radial, d'une position de départ jusqu'à une position de travail, et en animant ces molettes de rainurage (106) d'un mouvement de révolution de façon à réaliser la première gorge annulaire (44) dans la tige de piston (40),
et en ce qu'on réalise la seconde gorge annulaire (50) en maintenant la tige de piston (40) fixe, dans une position de travail, et en déplaçant plusieurs molettes de rainurage uniformément réparties (128) vers l'intérieur dans le sens radial et l'une à l'encontre de l'autre, de façon que la tige de piston (40) serve de mandrin et que le piston soit accouplé à la tige de piston d'une manière perpendiculaire et avec une concentricité des deux pièces qui est rendue optimale.

2. Procédé suivant la revendication 1, caractérisé en ce que la chemise de piston (36) comprend un corps cylindrique principal, en ce que le collet cylindrique (38), qui se dresse sur cette chemise de piston (36), s'étend à partir d'une portion centrale de ce corps principal, en ce que, dans l'état de connection mutelle, la tige de piston (40) s'étend d'une manière concentrique par rapport à ce collet cylindrique (38) se dressant sur la chemise de piston (36), des parois cylindriques de la tige de piston (40) et du collet cylindrique (38), qui se font face, se trouvant au contact l'une de l'autre, et en ce que la partie annulaire (54) de la paroi intérieure (52) du collet (38) qui sert à assurer la connection mutuelle de la paroi de la tige de piston et de la chemise de piston (36) comporte des moyens du type nervure annulaire qui font l'objet d'un emboîtement mutuel avec la première gorge annulaire (44) de façon à assurer un joint à résistance élevée à la traction.

3. Procédé suivant la revendication 1 ou 2, caractérisé en ce qu'un tampon cylindrique élastomère (56) entoure la tige de piston (40), une partie en forme de bague (58) de ce tampon (56) qui s'étend radialement vers l'intérieur s'emboîtant dans la seconde gorge annulaire (50) de façon à assurer la connection du tampon (56) sur la tige de piston (40).

4. Procédé suivant la revendication 3, caractérisé en ce que des moyens du type rondelle de répartition de charge (60) sont emprisonnées entre le tampon (56) et le piston (32) du fait de la mise en place de ce tampon (56) par rapport à ce piston (32).

5. Procédé suivant la revendication 1, caractérisé en ce que la chemise de piston (36) fait partie d'un piston en forme de chemise (32) comportant un corps cylindrique principal, le collet cylindrique (38) qui se dresse sur lui formant une partie cylindrique centrale rétrécie qui s'étend perpendiculairement vers le haut à partir du corps cylindrique principal du piston (32), en ce que la tige de piston (40) et le piston (32) ont des dimensions respectives leur permettant de s'emboîter de manière étroite d'une façon coulissante l'une par rapport à l'autre, en ce que la déformation de la seconde gorge (50) s'enfonçant dans le collet (38) de la chemise de piston (36) forme des moyens annulaires du type gorge et nervure de façon à assurer une jonction rigide du piston (32) sur la tige de piston (40) suivant un joint mécanique à résistance élevée à la traction et en ce qu'une pièce élastomère (56) comporte une nervure intérieure (58) s'emboîtant de manière élatique dans l'une (50) des gorges annulaires extérieures (44 et 50) de manière à retenir ainsi cette pièce élastomère (56) sur la jonction réalisée entre le piston (32) et la tige de piston (40).

6. Procédé suivant la revendication 5, caractérisé en ce qu'une rondelle (60) est disposée autour du collet cylindrique (38) et de la tige de piston (40) et est retenue en position par son contact avec l'extrémité inférieure de la pièce élastomère (56).

7. Procédé suivant la revendication 5 ou 6, caractérisé en ce que la nervure intérieure (58) de la pièce élastomère (56) assure une connection élastique mutuelle réunissant cette pièce élastomère (56) au collet cylindrique (38) du piston (32).

## Patentansprüche

1. Verfahren zur Herstellung einer modularen Kolben/Kolbenstangen-Anordnung für eine Stoßdämpfereinheit, mit den Schritten:
es wird eine längliche hohle Kolbenstange (40) mit einer vorbestimmten Wandstärke und mit oberen und unteren (46) Enden hergestellt;
es wird eine vorbestimmte Stelle an der Kolbenstange (40) von einem ihrer Enden aus und einem (46) ihrer Enden benachbart festgelegt;
es wird eine erste Ringnut (44) in der Kolbenstange (40) ausgebildet, die der vorbestimmten Stelle entspricht und die Wand der Kolbenstange (40) radial nach innen verformt und nutet;
die Kolbenstange (40) wird in einen nach oben abstehenden zylindrischen Bund (38) eines Kolbenmantels (36) eingesetzt; und
es wird in den Bund (30) konzentrisch mit der ersten Nut (44) eine zweite Ringnut (50) so eingeformt, daß ein Ringabschnitt (54) der Innenwand (52) des Bundes (30) zum Eindringen in die erste Nut (44) gebracht und so die Kolbenstangenwand und der Kolbenmantel (36) verbunden werden; dadurch gekennzeichnet, daß die erste Ringnut (44) in der Kolbenstange (40) ausgebildet wird, indem die Kolbenstange (40) stationär gehalten wird, eine Vielzahl von Nutbildungs-Rollen (106) axial von einer Ausgangslage radial nach innen in eine Arbeitslage bewegt wird und die Nutbildungs-Rollen (106) zur Ausbildung der ersten Ringnut (4) in der Kolbenstange (40) rotiert werden, und daß die zweite Ringnut (50) ausgebildet wird, indem die Kolbenstange (40) in einer Arbeitsstellung stationär gehalten wird und eine Vielzahl von auf gleichem Abstand voneinander gehaltenen Formrollen (128) radial nach innen einander entgegengesetzt so bewegt wird, daß die Kolbenstange (40) als ein Dorn wirkt und der Kolben mit optimierter Konzentrizität beider Teile rechtwinklig mit der Kolbenstange gekoppelt wird.

2. Verfahren nach Anspruch 1, dadurch gekennzeichnet, daß der Kolbenmanteil (36) einen zylindrischen Hauptkörper enthält, daß der nach oben abstehende zylindrische Bund (38) des Kolbenmantels (36) von einem Zentralabschnitt des Hauptkörpers absteht, die Kolbenstange (40) im verbundenen Zustand sich in konzentrischer Beziehung mit dem nach oben abstehenden zylindrischen Bund (38) des Kolbenmantels (36) erstreckt, wobei die formschlüssig ineinandersitzenden Zylinderwände der Kolbenstange (40) und des zylindrischen Bundes (38) einander berühren und der Ringabschnitt (54) der Innenwand (52) des Bundes (38), der zur Verbindung der Kolbenstangenwand mit dem Kolbenmantel (36) wirksam ist, Ringzungenmittel umfaßt, die mit der ersten Ringnut (40) in Formschluß sind, um eine Verbindung hoher Zugfestigkeit zu schaffen.

3. Verfahren nach Anspruch 1 oder 2, dadurch gekennzeichnet, daß ein elastomeres zylindrisches Stoßfangteil (56) die Kolbenstange (40) umgibt, wobei ein radial nach innen reichender Ringteil (54) des Stoßfangteils (56) in die zweite Ringnut (50) einpaßt, um das Stoßfangteil (56) mit der Kolbenstange (40) zu verbinden.

4. Verfahren nach Anspruch 3, dadurch gekennzeichnet, daß ein Lastverteil-Beilagscheibenmittel (60) durch die Lage des Stoßfangteils (56) relativ zum Kolben (32) zwischen dem Stoßfangteil (56) und dem Kolben (32) eingefangen ist.

5. Verfahren nach Anspruch 1, dadurch gekennzeichnet, daß der Kolbenmantel (36) einen Teil eines mantelartigen Kolbens (32) mit einem zylindrischen Hauptkörper bildet, wobei der nach oben abstehende zylindrische Bund (38) einen zentral liegenden, senkrecht nach oben von dem zylindrischen Hauptkörper des Kolbens (32) abstehenden zylindrischen Hals bildet, die Kolbenstange (40) und der Kolben (32) jeweils so bemessen sind, daß sie teleskopisch mit enger Beziehung zueinander passen, wobei die Verformung der zweiten Nut (50) in den Bund (38) des Kolbenmantels (36) ein ringförmiges Zungen- und Nut-Mittel bildet, um den Kolben (32) starr über eine mechanische Verbindung hoher Zugfestigkeit mit der Kolbenstange (40) zu verbinden und daß ein elastomeres Teil (56) mit einer inneren Zunge (58) elastisch in eine (50) der äußeren Ringnuten (44 und 50) eingepaßt wird, um dadurch das Elastomerteil (56) an der Verbindungsstelle zwischen dem Kolben (32) und der Kolbenstange (40) zurückzuhalten.

6. Verfahren nach Anspruch 5, dadurch gekennzeichnet, daß eine Beilagscheibe (60) um den Zylinderbund (38) und die Kolbenstange (40) angeordnet und in ihrer Lage durch Berührung mit dem unteren Ende des elastomeren Teils (56) gehalten ist.

7. Verfahren nach Anspruch 5 oder 6, dadurch gekennzeichnet, daß die innere Zunge (58) des elastomeren Teils (56) eine das elastomere Teil (56) mit dem zylindrischen Bunde (38) des Kolbens (32) vereinigende federnde Verbindung schafft.

EP 0 259 010 B1

Fig.1

Fig.2

Fig.3

EP 0 259 010 B1

*Fig. 4*

*Fig. 5*

*Fig. 6*

*Fig. 7*

*Fig. 8*